Europäisches Patentamt

**European Patent Office**

Office européen des brevets

(11) Veröffentlichungsnummer: **0 096 432**
**B1**

(12)

# EUROPÄISCHE PATENTSCHRIFT

(45) Veröffentlichungstag der Patentschrift:
**27.08.86**

(51) Int. Cl.⁴: **G 01 F 23/36**

(21) Anmeldenummer: **83200721.5**

(22) Anmeldetag: **20.05.83**

(54) **Füllstandmessgerät.**

(30) Priorität: **03.06.82 DE 3220864**

(43) Veröffentlichungstag der Anmeldung:
**21.12.83 Patentblatt 83/51**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**DE - A - 2 002 137**
**DE - A - 2 659 416**
**DE - A - 2 853 360**
**US - A - 4 313 114**

**Die Akte enthält technische Angaben, die nach dem Eingang der Anmeldung eingereicht wurden und die nicht in dieser Patentschrift enthalten sind.**

(73) Patentinhaber: **KROHNE MESSTECHNIK GMBH & CO. KG, Ludwig-Krohne-Strasse 5, D-4100 Duisburg 1 (DE)**

(72) Erfinder: **van der Pol, Ronald, Dipl.-Ing., Victor-Hugostraat 27, Venlo (NL)**
Erfinder: **Mertens, Dieter, Allensteiner Strasse 21, D-4100 Duisburg 46 (DE)**

(74) Vertreter: **Ackmann, Günther, Dr.-Ing., Claubergstrasse 24 Postfach 10 09 22, D-4100 Duisburg 1 (DE)**

## Beschreibung

Die Erfindung betrifft ein Füllstandmessgerät mit den im Oberbegriff des Anspruchs 1 bzw. 2 enthaltenen Merkmalen. Bei einem solchen, dem Oberbegriff des Anpruchs 2 entsprechenden, aus der DEA 2 853 360 bekannten Füllstandmessgerät ist die Trommelwelle durch eine Feder an ein koaxial gelagertes Drehgestell elastisch angekoppelt, welches über ein Getriebe mit der Antriebswelle des Servomotors kraftschlüssig verbunden ist, an der auch eine Anzeigeeinrichtung angeschlossen ist. Durch die nach beiden Drehrichtungen wirksame Federspannung wird das bei auf der Messflüssigkeit aufliegender Tastplatte auf die Seiltrommel ausgeübte Drehmoment ausgeglichen. Verändert sich das Niveau der Messflüssigkeit, wird dieses Moment erhöht oder erniedrigt, und die Feder verdreht die Trommel gegenüber dem Drehgestell. Die Drehmomentenänderung wird durch einen kontaktlosen Signalgeber festgestellt, der den Servomotor mittels einer Steuereinrichtung in Drehrichtung und Geschwindigkeit steuert, wodurch die angekoppelte Seiltrommel so lange gedreht wird, bis sich das Momentengleichgewicht wieder eingestellt hat. Als kontaktlose Signalgeber sind zwei den beiden Dreheinheiten zugeordnete Schlitz- oder Lochscheiben zugeordnet, die in Verbindung mit einem elektrostatischen Feld, Magnetfeld oder Lichtquellen und geeigneten Empfängern dem Drehwinkel entsprechende Spannungssignale schaffen. Diese Spannungssignale werden einerseits über eine Motorgeschwindigkeits-Steuereinrichtung und andererseits über eine die Drehrichtung mittels einer Bezugsspannung feststellende Vergleichsstufe einer Steuereinrichtung zugeführt, welche den Antrieb des Servomotors steuert.

Aus der USA 4 313 114 ist ein Füllstandmessgerät bekannt, bei dem das über eine Seilscheibe laufende Seil mit einem Kontergewicht versehen ist. Eine an der Welle der Seilscheibe befestigte Scheibe ist mit mehreren Permanentmagneten bestückt, welche auf Reedkontakte einwirken und Spannungsimpulse erzeugen, die zur Niveaumessung und Dekodierung der Drehrichtung verwendet werden.

Weiterhin ist durch Vorbenutzung ein dem Oberbegriff des Anspruchs 1 entsprechendes Füllstandmessgerät in einer explosionsgeschützten Ausführung bekannt, bei dem die in einer abgekapselten Gehäusekammer angeordnete Antriebseinheit über eine Magnetkupplung mit der Seiltrommel verbunden ist. Bei dieser Ausführung ist der Servomotor an einem koaxial zur Motorwelle gelagerten Drehgestell befestigt, welches in beiden Drehrichtungen federnd am Gerätegehäuse angekoppelt ist. Mit der Motorwelle ist ein Zahnradgetriebe verbunden, welches mit einer geeigneten Übersetzung ein Rollenzählwerk antreibt. Zur Bildung eines der Auslenkung proportionalen Steuersignals ist am Drehgestell ein Potentiometer angeordnet, welches mit einem am Gehäuse befestigten Stift in Eingriff steht.

Die Messgenauigkeit solcher Füllstandmessgeräte wird jedoch durch verschiedene Einflüsse beeinträchtigt. Durch den Zufluss von Messflüssigkeit in den Tank und durch Rührwerke o. dgl. verursachte Wellenbildungen führen zu ungenauen und meist nicht reproduzierbaren Messergebnissen. Weitere Messungenauigkeiten werden dadurch verursacht, dass in Abhängigkeit von der abgewickelten Seillänge das Seilgewicht und damit das auf die Seiltrommel einwirkende Drehmoment verändert wird.

Demgegenüber liegt der Erfindung die Aufgabe zugrunde, Füllstandmessgeräte entsprechend dem Oberbegriff der Ansprüche 1 und 2 derart auszubilden, dass die Regelung sich schnellen Niveauänderungen anpasst.

Diese Aufgabe wird durch die kennzeichnenden Merkmale der Ansprüche 1 bzw. 2 gelöst.

Bei beiden Gerätetypen wird in der Vergleichsstufe das der Auslenkung proportionale Ausgangssignal des Signalgebers mit einem Sollwert verglichen, der dem Momentengleichgewicht entspricht. Aus dem die Störgrösse darstellenden Differenzwert wird eine Impulsfrequenz geschaffen, welche den Servomotor ansteuert und entsprechend schnell regelt, wobei dessen Drehrichtung mit Hilfe eines Richtungsdekoders gesteuert wird. Die Ansteuerung des Servomotors mit einer Impulsfrequenz gestattet eine von Wellenbildungen nicht gestörte Messung, während die Vergleichsstufe für die Eingabe von Kompensationsgrössen, z.B. zur Kompensation des abgewickelten Seilgewichts, und von Steuersignalen, z.B. zur Überwindung der Adhäsivkraft beim Herausziehen der Tastplatte, besonders geeignet ist. Um Störeinflüsse wie Wellenbewegung der Messflüssigkeit möglichst auzuschalten, ist eine Steuereinrichtung zur wechselweisen Umschaltung der Impulsfrequenz mit einem Wechselschalter auf einen Steuerkreis zur Ansteuerung des Servomotors mit der von der Regelabweichung abgeleiteten Frequenz des Spannungs-Frequenz-Wandlers oder auf einen Steuerkreis zur verzögerten Ansteuerung des Servomotors mit einer von einem Oszillator gelieferten, einstellbaren Frequenz vorgesehen, wobei der Wechselschalter von einem Fensterdiskriminator gesteuert wird, der über ein Dämpfungsglied an das verstärkte Ausgangssignal der Vergleichsstufe angeschlossen ist. Mit der Steuerschaltung wird das abgegriffene verstärkte Ausgangssignal der Vergleichsstufe gedämpft, so dass durch Wellenbewegungen verursachte kleinere Abweichungen vom Momentengleichgewicht nicht zu einem ständigen Hin- und Herschalten des Servomotors führen.

Findet eine wirkliche Änderung des Niveaus der Messflüssigkeit statt, wird der Regelbetrieb durch das relativ schmale Fenster des Fensterdiskriminators auf die von der Störgrösse abhängige Steuerung umgeschaltet.

Für den wechselweisen Betrieb über zwei Steuerkreise ist die Polaritätsdekodierung anzupassen. Dies geschieht zweckmässig dadurch, dass in der Steuerleitung für den Polaritätsschalter ein ebenfalls vom Fensterdiskriminator gesteuerter weiterer Wechselschalter angeordnet ist, der zur Polaritätsdekodierung der Regelabweichung in der Schaltstellung für die verzögerte Ansteuerung über einen Schmitt-Trigger an den Ausgang des Dämpfungsgliedes angeschlossen ist. Hierbei wird für die Polaritätsdekodierung bei verzögerter Ansteuerung ebenfalls das gedämpfte Ausgangssignal der Vergleichsstufe verwendet. In der Steuerleitung für die Wechselschalter kann ein richtungsabhängiges Zeitglied angeordnet sein, welches bei einer Änderung des Ausgangswertes des Fensterdiskriminators von Null nach Eins eine Verzögerung von etwa 5 s bewirkt, so dass das Umschalten von normaler Ansteuerung auf verzögerte Ansteuerung durch eine Totzeit verzögert wird, während bei einer umgekehrten Änderung von verzögerter Ansteuerung auf normale Ansteuerung keine Totzeit wirksam wird, so dass die Tastplatte einer Niveauänderung schnell folgt.

Zur Kompensation des Gewichts der von der Seiltrommel abgewickelten Seillänge ist am Drehgestell ein Potentiometer angeordnet, dessen Schleifer über ein Getriebe mit der Antriebswelle des Servomotors verbunden ist und ein der von der Seiltrommel abgewickelten Seillänge proportionales Signal liefert, welches der Vergleichsstufe als Kompensationsgrösse zugeführt ist. Die Messgenauigkeit wird hierdurch wesentlich erhöht.

Neben einer Messwertanzeige unmittelbar am Füllstandmessgerät, z.B. durch ein an die Antriebswelle des Servomotors gekoppeltes Rollenzählwerk, ist in der Regel eine Fernanzeige erwünscht. Hierfür ist vorgesehen, dass im Drehgestell ein mit der Antriebswelle des Servomotors verbundener Inkrementalgeber angeordnet ist, dessen Signale Vorwärts-/Rückwärtszählern einer Fernanzeige zugeführt werden und für dessen Preseteingabe eine Steuerschaltung vorgesehen ist, mit der durch Zuschalten eines den Sollwert der Vergleichsstufe erhöhenden Spannungswertes die Tastplatte mit einer vorbestimmten Kraft gegen einen oberen Anschlag hochgezogen und nach Einstellung des Momentengleichgewichts ein Presetimpuls an die Vorwärts-/Rückwärtszähler geliefert wird. Die Steuerschaltung bewirkt eine selbständige Preseteingabe, wenn z.B. durch Netzausfall die Information im Zähler verlorengegangen ist. Bei der erfindungsgemässen Steuerung wird die Tastplatte mit einer relativ kleinen, sehr genauen Kraft gegen den, einen Bezugspunkt bildenden oberen Anschlag gefahren und in diesem statischen Zustand der Presetimpuls zum Einlesen des Presetwertes für den Zähler ausgelöst. Die Kraft, mit der die Tastplatte gegen den Referenzpunkt gezogen wird, soll möglichst klein sein, damit das vom Servomotor gelieferte, auf die Seiltrommel wirkende Drehmoment möglichst gleich gross ist wie beim Aufsetzen der Tastplatte auf die Messflüssigkeit.

Beim Herausfahren der Tastplatte aus der Messflüssigkeit, z.B. zum Zweck einer neuen Preseteingabe, ist eine relativ grosse Adhäsionskraft zu überwinden. Hierfür ist vorgesehen, dass über einen von der Steuerlogik gesteuerten Schalter ein hoher Spannungswert auf eine Dauer von etwa 5 s an die Vergleichsstufe angelegt wird. Während dieser Dauer wird die Tastplatte mit einer entsprechend grossen Kraft hochgezogen und anschliessend wird auf die kleinere Sollwertänderung umgeschaltet, die für eine Preseteingabe vorgesehen ist.

Der Gegenstand der Erfindung ist in der Zeichnung in einem Ausführungsbeispiel dargestellt; es zeigt:

Fig. 1 ein Füllstandmessgerät im Bereich der Seiltrommel und der Antriebseinheit in einem Längsschnitt und

Fig. 2 das Blockdiagramm einer Schaltanordnung für die Verarbeitung der Signale.

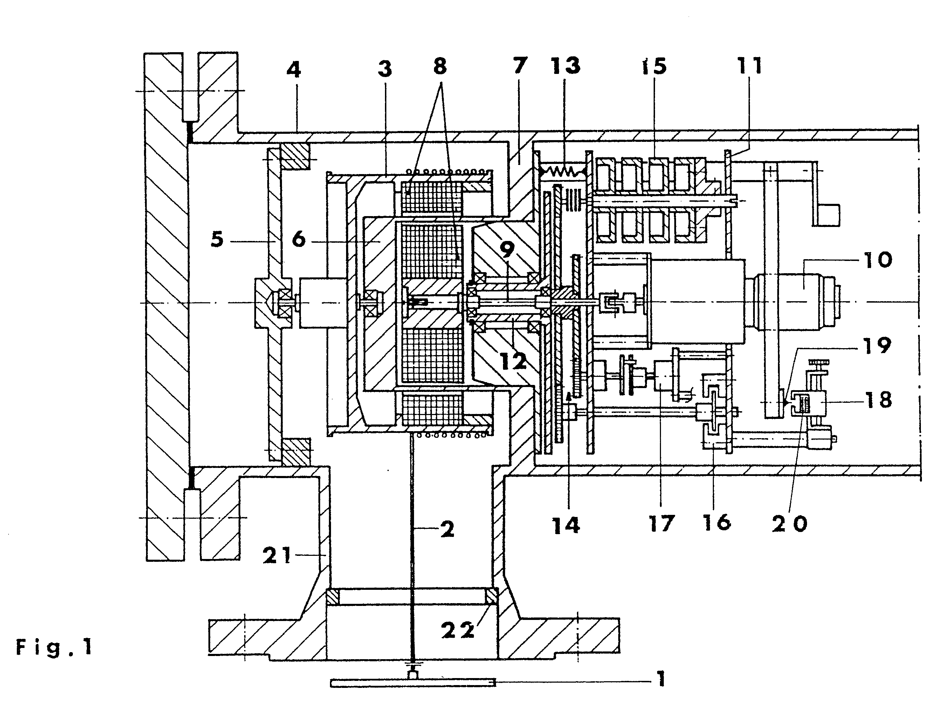

Das in Fig. 1 dargestellte Füllstandmessgerät besteht im wesentlichen aus einer Tastplatte 1, deren Messseil 2 auf einer Seiltrommel 3 aufgewickelt ist, die im Gerätegehäuse 4 an einer Wand 5 und einem Lagerblock 6 drehbar gelagert ist. Der napfförmig ausgestaltete Lagerblock 6 und eine Wand 7 trennen den die Seiltrommel 3 aufnehmenden Raum explosionssicher von einer Gehäusekammer, in der die Antriebseinheit mit ihren elektrischen Einrichtungen angeordnet ist. Die kontaktlose Verbindung zwischen der Seiltrommel 3 und der Antriebswelle 9 eines Servomotors 10 geschieht über eine Magnetkupplung 8, die aus einem innerhalb der Seiltrommel 3 angebrachten und einem auf der Antriebswelle 9 befestigten Magneten besteht. Der Servomotor 10 ist an einem Drehgestell 11 befestigt, welcher mit einer Lagerhülse 12 koaxial zur Antriebswelle 9 drehbar am Gerätegehäuse 4 gelagert und in beiden Drehrichtungen durch Federn 13 elastisch am Gerätegehäuse 4 angekoppelt ist. Durch die nach beiden Drehrichtungen wirksame Federspannung wird das bei auf der Messflüssigkeit aufliegender Tastplatte auf die Seiltrommel 3 ausgeübte Drehmoment ausgeglichen.

In dem Drehgestell 11 ist weiterhin ein Getriebe 14 angeordnet, welches mit der Antriebswelle 9 des Servomotors 10 in Eingriff steht und mit einer geeigneten Übersetzung ein Rollenzählwerk 15, einen Inkrementalgeber 16 und ein Potentiometer 17 antreibt. Das Rollenzählerwerk 15 kann beispielsweise über eine Reibkupplung o. dgl. angekoppelt sein. Als Inkrementalgeber 16 können verschiedene Ausführungen gewählt werden, bei denen z.B. eine Schlitz- oder Lochscheibe zwischen einer Lichtquelle und Fotodioden verdreht wird und die Lichtstrahlunterbrechung in sinusförmige elektrische Signale umgewandelt wird. Für die Dekodierung der Drehrichtung kann eine zusätzliche Schlitzreihe vorgesehen sein. Ebenso sind auch für das Potentiometer 17 verschiedene Typen geeignet, beispielsweise ein Helix-Potentiometer, dessen Schleiferwelle mit dem Getriebe 14 verbunden ist.

Zwischen dem Gerätegehäuse 4 oder daran befestigten Trägerarmen und dem Drehgestell 11 ist ein kontaktloser Signalgeber 18 angeordnet. Dieser besteht beim Ausführungsbeispiel aus einer Hallsonde 19 und einem Magneten 20 und liefert ein der Verdrehung zwischen beiden Geräteteilen proportionales elektrisches Signal, welches der Ansteuerung des Servomotors 10 dient; verändert sich das Niveau der Messflüssigkeit und entsprechend das auf die Seiltrommel 3 einwirkende Drehmoment, steuert dieses Signal den Servomotor 10 mittels einer Steuereinrichtung in Drehrichtung und Geschwindigkeit, wodurch die angekoppelte Seiltrommel 3 so lange gedreht wird, bis sich das Momentengleichgewicht wieder eingestellt hat.

Das Füllstandmessgerät ist mit einem Anschlussstutzen 21 auf einem nicht dargestellten, die Messflüssigkeit enthaltenden Tank befestigt. In diesem Anschlussstutzen 21 ist ausserdem ein Anschlag 22 für die Tastplatte 1 angebracht, der die Aufwärtsbewegung der Tastplatte 1 begrenzt und einen Bezugspunkt zum Eingeben eines Presets in den Inkrementalgeber 16 bildet. Ein solcher Anschlag 22 kann auch an anderer Stelle in der Bewegungsbahn der Tastplatte 1 angeordnet sein, z.B. an der Tastplatte zugeordneten Führungsseilen, an einem Schwallrohr o. dgl.

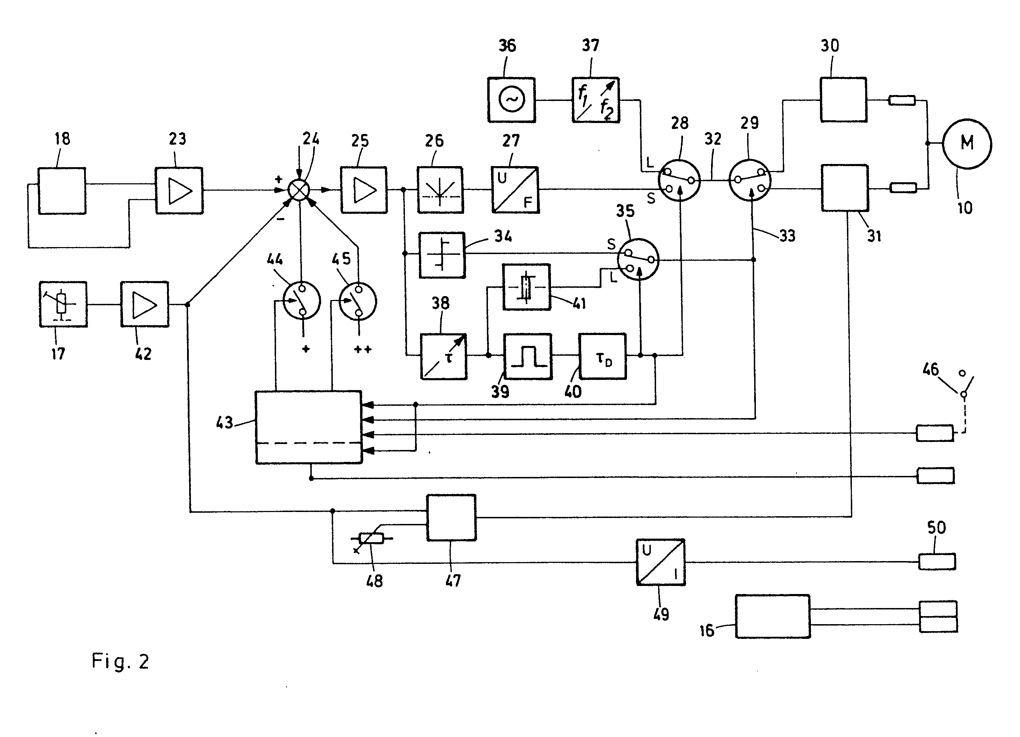

Das in Fig. 2 dargestellte Blockdiagramm zeigt die Schaltanordnung für die Regelung des Servomotors 10. Das Ausgangssignal des Signalgebers 18 wird über einen Verstärker 23 einer Vergleichsstufe 24 zugeführt und dort mit einem dem Momentengleichgewicht entsprechenden Sollwert verglichen. Das Ausgangssignal der Vergleichsstufe 24 wird über einen Verstärker 25 und einen Gleichrichter 26 einem Spannungs-Frequenz-Wandler 27 zugeführt, der das Spannungssignal in Impulse umwandelt, die über einen Wechselschalter 28 in dessen Schaltstellung «S» einem Polaritätsschalter 29 zugeführt werden, der es je nach Polarität an einen monostabilen Multivibrator 30 bzw. 31 schaltet. Die monostabilen Multivibratoren 30, 31 dienen der Ansteuerung des Servomotors 10, wobei der Multivibrator 30 dem Servomotor 10 Steuerimpulse für eine Hubbewegung und der Multivibrator 31 Steuerimpulse für eine Absenkbewegung liefert.

Die Steuerung des Polaritätsschalters 29 geschieht durch einen Polaritätsdekoder 34, z.B. einen Komparator, der an das verstärkte Ausgangssignal der Vergleichsstufe 24 angeschlossen ist. In der Steuerleitung 33 ist ausserdem ein weiterer Wechselschalter 35 angeordnet, der für diese Steuerung in der Schaltstellung «S» steht.

Der vorbeschriebene Regelkreis wird wirksam, wenn eine wirkliche Niveauänderung der Messflüssigkeit erfolgt und durch ein Ungleichgewicht der Drehmomente eine Auslenkung stattfindet. Treten jedoch an der Oberfläche der Messflüssigkeit Wellenbewegungen auf, besteht die Gefahr, dass sich schwankende Momente einstellen, die zu einem ständigen Hin- und Herschalten des Servomotors 10 führen können und eine genaue Ermittlung des Füllstandes ausschliessen. Um solche Störeinflüsse auszuschalten, ist eine Steuerschaltung vorgesehen, welche durch den bereits erwähnten Wechselschalter 28 wechselweise auf den vorstehend beschriebenen Regelkreis für normale Ansteuerung des Servomotors 10 mit der von der Störgrösse abgeleiteten Frequenz des Spannungs-Frequenz-Wandlers 27 oder auf einen zusätzlichen Steuerkreis zur Ansteuerung mit einer von einem Oszillator 36 gelieferten und mittels eines Frequenzteilers 37 einstellbaren Frequenz umschaltet. Die Steuerung des Wechselschalters 28 erfolgt durch einen Fensterdiskriminator 39, der über ein Dämpfungsglied 38 an das verstärkte Ausgangssignal der Vergleichsstufe 24 angeschlossen ist. Ausserdem ist an den Ausgang des Fensterdiskriminators 39 ein Zeitglied 40 angeschlossen, welches bei einer Änderung des Ausgangssignals des Fensterdiskriminators 39 von Null auf Eins eine Verzögerung von etwa 5 s bewirkt, so dass das Umschalten von normaler Steuerung auf verzögerte Steuerung durch eine Totzeit verzögert wird, während bei einer umgekehrten Änderung von verzögerter Steuerung auf normale Steuerung keine Totzeit wirksam wird. Die Umschaltung auf den Regelkreis für verzögerte Steuerung geschieht dann, wenn zunächst der vom Dämpfungsglied 38 gedämpfte Spannungswert innerhalb des Fensters vom Fensterdiskriminator 39, dieser von Null auf Eins umschaltet, und wenn dann die Totzeit des Zeitgliedes 40 verstrichen ist.

Zur Polaritätsdekodierung für den Regelkreis zur verzögerten Steuerung ist in der Steuerleitung 33 für den Polaritätsschalter 29 ein Wechselschalter 35 angeordnet, der synchron mit dem Wechselschalter 28 vom zeitverzögerten Ausgangssignal des Fensterdiskriminators 39 gesteuert wird. Befindet sich der Wechselschalter 35 in der Schaltstellung «L» für verzögerte Steuerung, ermittelt ein Schmitt-Trigger 41, der an den Ausgang des Dämpfungsgliedes 38 angeschlossen ist, die Polarität und steuert den Polaritätsschalter 29.

Um das der von der Seiltrommel abgewickelten Seillänge entsprechende Gewicht zu kompensieren, liefert das am Drehgestell 11 angeordnete Potentiometer 17 ein entsprechendes Signal, welches über einen Verstärker 42 als Kompensationsgrösse der Vergleichsstufe 24 zugeführt wird. Das Potentiometer 17 kann von einfacher Ausführung sein.

Die Messwertanzeige erfolgt einerseits unmittelbar am Füllstandmessgerät durch das an die Antriebswelle 9 des Servomotors 10 gekoppelte Rollenzählwerk 15 (vgl. Fig. 1). Andererseits ist eine Fernanzeige vorgesehen, bei der dem Füllstand entsprechende Messsignale z.B. einem entfernt liegenden Vorwärts-/Rückwärtszähler o. dgl. in Anzeigegrössen umgewandelt werden. Zur Erzeugung solcher Messsignale für die Fernanzeige wird der Inkrementalgeber 16 benutzt, der im Drehgestell 11 angeordnet ist und von der Antriebswelle 9 des Servomotors 10 betätigt wird.

Bei Verwendung von Inkrementalzählern und nachgeschalteten Zählern besteht jedoch die Gefahr, dass bei Netzausfall der Informationswert im Zähler gelöscht wird und bei späterer Netzzuschaltung wieder gesucht werden muss. Dies geschieht durch eine Steuerschaltung, mit der das Zuschalten eines den Sollwert der Vergleichsstufe 24 erhöhenden Spannungswertes die Tastplatte 1 mit einer vorbestimmten Kraft gegen den als Bezugspunkt dienenden Anschlag 22 (vgl. Fig. 1) hochgezogen wird. Diese Kraft wird so vorbestimmt, dass das dabei auf die Seiltrommel 3 ausgeübte Drehmoment etwa gleich gross ist, wie das beim Aufsetzen der Tastplatte 1 auf die Messflüssigkeit ausgeübte Drehmoment. Beim Anlegen der Tastplatte 1 an den Anschlag 22 stellt sich dann ein Momentengleichgewicht ein, woraufhin ein Presetimpuls an die Zähler gegeben wird, der diese in den Zustand versetzt, von dem aus die Zählung beginnt. Bei der in Fig. 2 dargestellten Schaltanordnung wird der vorgegebene Spannungswert der Vergleichsstufe 24 über einen Schalter 44 zugeführt, der von einer Steuerlogik 43 gesteuert wird. Die Steuerlogik 43 ist so ausgebildet, dass sie nach einem Netzausfall bei der folgenden Netzeinschaltung den Schalter 44 einschaltet, nach Einstellung des Momentengleichgewichts ausschaltet und gleichzeitig auf normalen Messbetrieb umschaltet, so dass dann die Tastplatte 1 wieder bis auf die Messflüssigkeit absinkt und dabei der Inkrementalgeber 16 dem Zähler entsprechende Signale zuführt.

Zum Herausfahren der Tastplatte 1 aus der Messflüssigkeit, wie es z.B. für eine neue Preseteingabe erforderlich ist, wird vorzugsweise über einen von der Steuerlogik 43 gesteuerten Schalter 45 ein weiterer hoher Spannungswert auf die Dauer von etwa 5 s an die Vergleichsstufe 24 angelegt. Diese Kraft reicht zum Herausfahren aus, woraufhin die weitere Aufwärtsbewegung durch den über den Schalter 44 zugeführten Spannungswert erfolgt.

Um die Reproduzierbarkeit von Messwerten zu prüfen, kann die Steuerlogik 43 so ausgebildet sein, dass bei Betätigung eines Startschalters 46 die Schalter 44, 45 kurzzeitig geschlossen werden, so dass sich die Tastplatte 1 etwas von der Messflüssigkeit abhebt und kurz danach wieder der normale Regelbetrieb stattfindet. Messwertvergleiche zeigen dabei die Reproduzierbarkeit an.

Soll die Tastplatte 1 nicht über eine bestimmte Stelle abgesenkt werden, weil sich z.B. darunter ein Rührwerk o. dgl. befindet, lässt sich auf einfache Weise eine kontaktlose Begrenzung einstellen, indem ein Komparator 47 das verstärkte Ausgangssignal des Potentiometers 17 mit einem auf diese Begrenzungshöhe eingestellten Wert eines Grenzwert-Stellgliedes 48 vergleicht und bei Grenzwertüberschreitung den die Absenkbewegung steuernden Multivibrator 31 sperrt. Der den Füllstand grob darstellende Signalwert des Potentiometers 17 kann auch mittels eines Spannungs-Strom-Wandlers 49 als Stromgrösse einem Ausgang 50 zugeführt und dort für beliebige Zwecke verwendet werden.

Die beschriebene Steuerschaltung zur Ansteuerung des Servomotors mit einer von der Störgrösse abgeleiteten Frequenz ist, einschliesslich der ihr zugeordneten Hilfsfunktionen, für alle Füllstandmessgeräte geeignet, bei denen eine Momentenregelung durch Federelemente o. dgl. stattfindet und der Servomotor für einen Momentenausgleich angesteuert wird. Hierzu gehören auch Ausführungen, bei denen die Seiltrommel über eine Feder an die Antriebswelle des Servomotors angekoppelt ist.

**Patentansprüche**

1. Füllstandmessgerät, dessen mit einer Tastplatte (1) ausgerüstetes Messseil (2) an einer mit der Antriebswelle (9) eines Servomotors (10) verbundenen Seiltrommel (3) angebracht ist und welches an die Antriebswelle (9) angeschlossene Anzeigeeinrichtungen sowie eine Regeleinrichtung aufweist, wobei das drehbar gelagerte Motorgehäuse in beiden Drehrichtungen federnd an das feste Gerätegehäuse (4) angekoppelt und zwischen Motorgehäuse und Gerätegehäuse (4) ein elektrischer Signalgeber (18) vorgesehen ist, an dessen Ausgang eine mit einem dem Momentengleichgewicht entsprechenden Sollwert gespeiste Vergleichsstufe (24) angeschlossen ist und dessen bei einer durch Niveauänderungen der Messflüssigkeit verursachten Verdrehung erzeugtes Signal über eine Schaltanordnung den Servomotor (10) bis zur Einregelung des Momentengleichgewichts ansteuert, wobei die Schaltanordnung mit Einrichtungen zur Geschwindigkeitssteuerung, Dekodierung der Polariät und Ansteuerung des Servomotors (10) versehen ist, dadurch gekennzeichnet, dass an den die Regelabweichung führenden Ausgang der Vergleichsstufe (24) aufeinanderfolgend ein Verstärker (25), ein Gleichrichter (26) und ein Spannungs-Frequenz-Wandler (27) angeschlossen sind und dass die Frequenz des Spannungs-Frequenz-Wandlers (27) über einen Polaritätsschalter (29), der von einem an das verstärkte Ausgangssignal der Vergleichsstufe (24) angeschlossenen Polaritätsdekoder (34) gesteuert wird, je einem von zwei der Ansteuerung des Servomotors (10) dienenden monostabilen Multivibratoren (30, 31) zugeführt wird.

2. Füllstandmessgerät, dessen mit einer Tastplatte (1) ausgerüstetes Messseil (2) an einer mit der Antriebswelle (9) eines Servomotors (10) verbundenen Seiltrommel (3) angebracht ist und welches an die Antriebswelle (9) angeschlossene Anzeigeeinrichtungen sowie eine Regeleinrichtung aufweist, wobei die Antriebswelle (9) des Servomotors (10) über eine Feder (13) an die Seiltrommel (3) angekoppelt und ein elektrischer Signalgeber (18) vorgesehen ist, an dessen Ausgang eine mit einem dem Momentengleichgewicht entsprechenden Sollwert gespeiste Vergleichsstufe (24) angeschlossen ist und dessen bei einer durch Niveauänderungen der Messflüssigkeit verursachten Verdrehung erzeugtes Signal über eine Schaltanordnung den Servomotor (10) bis zur Einregelung des Momentengleichgewichts ansteuert, wobei die Schaltanordnung mit Einrichtungen zur Geschwindigkeitssteuerung, Dekodierung der Polarität und Ansteuerung des Servomotors (10) versehen ist, dadurch gekennzeichnet, dass an den die Regelabweichung führenden Ausgang der Vergleichsstufe (24) aufeinanderfolgend ein Verstärker (25), ein Gleichrichter (26) und ein Spannungs-Frequenz-Wandler (27) angeschlossen sind und dass die Frequenz des Spannungs-Frequenz-Wandlers (27) über einen Polaritätsschalter (29), der von einem an das verstärkte Ausgangssignal der Vergleichsstufe (24) angeschlossenen Polaritätsdekoder (34) gesteuert wird, je einem von zwei der Ansteuerung des Servomotors (10) dienenden monostabilen Multivibratoren (30, 31) zugeführt wird.

3. Füllstandmessgerät nach Anspruch 1 oder 2, gekennzeichnet durch einen Wechselschalter (28) zum wechselweisen Umschalten auf einen Steuerkreis zur Ansteuerung des Servomotors (10) mit der von der Regelabweichung abgeleiteten Frequenz des Spannungs-Frequenz-Wandlers (27), oder auf einen Steuerkreis zur verzögerten Aussteuerung des Servomotors (10) mit einer von einem Oszillator (36) gelieferten, einstellbaren Frequenz, wobei der Wechselschalter (28) von einem Fensterdiskriminator (39) gesteuert wird, der über ein Dämpfungsglied (38) an das verstärkte Ausgangssignal der Vergleichsstufe (24) angeschlossen ist.

4. Füllstandmessgerät nach Anspruch 3, dadurch gekennzeichnet, dass in der Steuerleitung (33) für den Polaritätsschalter (29) ein ebenfalls vom Fensterdiskriminator (39) gesteuerter weiterer Wechselschalter (35) angeordnet ist, der zur Polaritätsdekodierung der Regelabweichung in der Schaltstellung für die verzögerte Ansteuerung des Servomotors (10) über einen Schmitt-Trigger (41) an den Ausgang des Dämpfungsgliedes (38) angeschlossen ist.

5. Füllstandmessgerät nach einem der Ansprüche 1 bis 4, dadurch gekennzeichnet, dass an einem Drehgestell (11) ein Potentiometer (17) angeordnet ist, dessen Schleifer über ein Getriebe (14) mit der Antriebswelle (9) des Servomotors (10) verbunden ist und ein der von der Seiltrommel (3) abgewickelten Seillänge proportionales Signal liefert, welches der Vergleichsstufe (24) als Kompensationsgrösse zugeführt ist.

6. Füllstandmessgerät nach Anspruch 5, dadurch gekennzeichnet, dass im Drehgestell (11) ein mit der Antriebswelle (9) des Servomotors (10) verbundener Inkrementalgeber (16) angeordnet ist, dessen Signale Vorwärts-/und Rückwärtszählern einer Fernanzeige zugeführt werden und für dessen Preseteingabe eine Steuerschaltung vorgesehen ist, mit der durch Zuschalten eines den Sollwert der Vergleichsstufe (24) erhöhenden Spannungswertes die Tastplatte (1) mit einer vorbestimmten Kraft gegen einen oberen Anschlag (22) hochgezogen und nach Einstellung des Momentengleichgewichts ein Presetimpuls an die Vorwärts-/Rückwärtszähler geliefert wird.

7. Füllstandmessgerät nach einem der Ansprüche 1 bis 6, dadurch gekennzeichnet, dass zum Herausfahren der Tastplatte (1) aus der Messflüssigkeit über einen von einer Steuerlogik (43) gesteuerten Schalter (45) ein so hoher Spannungswert auf eine Dauer von etwa 5 s angelegt wird, dass die zwischen der Messflüssigkeit und der Tastplatte (1) ausgeübte Adhäsionskraft überwunden wird.

## Claims

1. A level gauge, in which the measuring cable (2) provided with a sensing plate (1) is disposed on a cable drum (3) connected to the drive shaft (9) of a servomotor (10), and which comprises display means connected to the drive shaft (9), and a control means, the rotatably mounted motor housing being coupled resiliently in both directions of rotation to the fixed gauge housing (4), and an electrical signal transmitter (18) is provided between the motor housing and the gauge housing (4), the signal transmitter output being connected to a comparator stage (24) to which there is fed a set-value corresponding to equilibrium of moments, the transmitter signal generated by rotation caused by changes of level in the liquid undergoing measurement triggering the servomotor (10) via a switching means until equilibrium of moments is obtained, the switching means being provided with means for speed control, polarity decoding, and triggering of the servomotor (10), characterised in that the output of the comparator stage (24) carrying the deviation is followed successively by an amplifier (25), a rectifier (26) and a voltage-frequency converter (27), and in that the frequency of the voltage-frequency converter is fed, via a polarity switch (29) controlled by a polarity decoder (34) connected to the amplified output signal of the comparator stage (24), to each of two monostable multivibrators (30, 31) serving to trigger the servomotor (10).

2. A level gauge, in which the measuring cable (2) provided with a sensing plate (1) is disposed on a cable drum (3) connected to the drive shaft (9) of a servomotor (10), and which comprises display means connected to the drive shaft (9), and a control means, the drive shaft (9) of the servomotor (10) being coupled to the cable drum (3) via a spring (13) and an electrical signal transmitter (18) is provided, at whose output there is connected a comparator stage (24) to which there is fed a set-value corresponding to equilibrium of moments, the signal transmitter signal generated by rotation caused by changes in the level of the liquid undergoing measurement triggering the servomotor (10) via a switching means until equilibrium of moments is obtained, the switching means being provided with means for speed control, polarity decoding, and for triggering the servomotor (10), characterised in that the output of the comparator stage (24) carrying the deviation is followed successively by an amplifier (25), a rectifier (26) and a voltage-frequency converter (27), and in that the frequency of the voltage-frequency converter (27) is fed, via a polarity switch (29) controlled by a polarity decoder (34) connected to the amplified output signal of the comparator stage (24), to each of two monostable multivibrators (30, 31) serving to trigger the servomotor (10).

3. A level gauge according to claim 1 or 2, characterised by a changeover switch (28) for alternate switching to a control circuit for triggering the servomotor (10) at the frequency of the voltage-frequency converter (27), derived from the deviation, or to a control circuit for delayed triggering of the servomotor (10) at an adjustable frequency delivered by an oscillator (36), the changeover switch (28) being controlled by a window discriminator (39) connected to the amplified output signal of the comparator stage (24) via an attenuating network (38).

4. A level gauge according to claim 3, characterised in that the control line (33) for the polarity switch (29) contains another changeover switch (35) also controlled by the window discriminator (39) and connected to the output of the attenuator network (38) via a Schmitt trigger (41) for polarity decoding of the deviation in the switching position for delayed triggering of the servomotor (10).

5. A level gauge according to any one of claims 1 to 4, characterised in that a potentiometer (17) is disposed on a rotary frame (11), the potentiometer wiper being connected via a gear (14) to the drive shaft (9) of the servomotor (10) and delivering a signal proportional to the cable length unwound from the cable drum (3), said signal being fed as a compensation variable to the comparator stage (24).

6. A level gauge according to claim 5, characterised in that the rotary frame (11) contains an incremental transmitter (16) connected to the drive shaft (9) of the servomotor (10), its signals being fed to forward and backward counters of a remote display, a control circuit being provided for its preset input, by means of which circuit, by the addition of a voltage value increasing the set-value of the comparator stage (24), the sensor plate (1) is lifted against a top stop (22) at a predetermined force and, after equilibrium of moments is obtained, a preset pulse is delivered to the forward and backward counters.

7. A level gauge according to any one of claims 1 to 6, characterised in that in order to remove the sensor plate (1) from the liquid undergoing measurement a high voltage is applied for a period of about 5 seconds by way of a switch (45) controlled by a control logic circuit (43), the voltage being such that the adhesion force exerted between the liquid undergoing measurement and the sensor plate (1) is overcome.

## Revendications

1. Appareil de mesure de l'état de remplissage dont le câble de mesure (2), pourvu d'une plaque de détection (1), est raccordé à un tambour à câble (3) relié à l'arbre d'entraînement (9) d'un servomoteur (10), et qui comporte des dispositifs d'affichage reliés à l'arbre d'entraînement (9) ainsi qu'un dispositif de réglage, le carter du moteur monté à rotation dans les deux sens étant accouplé élastiquement au carter fixe (4) de l'appareil et un générateur électrique de signaux (18) étant prévu entre le carter du moteur et le carter de l'appareil (4), générateur de signaux à la sortie duquel est relié un étage comparateur (24) alimenté par une valeur de consigne qui correspond à l'équilibre des couples et dont le signal produit lors d'une rotation provoquée par une variation du niveau du liquide à mesurer, commande, par l'intermédiaire d'un circuit de commutation, le servomoteur (10) jusqu'au réglage de l'équilibre des couples, lequel circuit de commutation est équipé de dispositifs de commande de la vitesse, de décodage de la polarité et d'attaque du servomoteur (10), caractérisé par le fait qu'à la sortie de l'étage comparateur (24), au niveau de laquelle sont présents les écarts de réglage, sont raccordés successivement un amplificateur (25), un redresseur (26) et un convertisseur tension-fréquence (27), et que la fréquence du convertisseur tension-fréquence (27) est envoyée, par l'intermédiaire d'un commutateur de polarité (29) qui est commandé par un décodeur du sens de polarité (34) relié au signal amplifié de l'étage comparateur (24), respectivement à l'un des deux multivibrateurs monostables (30, 31) servant à commander le servomoteur (10).

2. Appareil de mesure de l'état de remplissage, dont le câble de mesure (2), pourvu d'une plaque de détection (1), est raccordé à un tambour à câble (9) d'un servomoteur (10) et qui comporte des dispositifs d'affichage reliés à l'arbre d'entraînement (9) ainsi qu'un dispositif de réglage, l'arbre d'entraînement (9) du servomoteur (10) étant accouplé par l'intermédiaire d'un ressort (13) au tambour à câble (3) et un générateur de signaux (18) étant prévu, à la sortie duquel est relié un étage comparateur (24) alimenté avec une valeur de consigne qui correspond à l'équilibre des couples, et dont le signal produit par une rotation dû à des changements du niveau du liquide de mesure, attaque, par l'intermédiaire d'un dispositif de commutation, le servomoteur (10) jusqu'à l'établissement de l'équilibre des couples, ledit dispositif de commutation étant pourvu de moyens pour la commande de la vitesse, pour le décodage de la polarité et pour l'attaque du servomoteur (10), caractérisé par le fait qu'à la sortie de l'étage amplificateur, au niveau de laquelle est présent l'écart de réglage, sont reliés successivement un amplificateur (25), un redresseur (26) et un convertisseur tension-fréquence (27), et que la fréquence du convertisseur tension-fréquence (27) est appliquée, par l'intermédiaire d'un interrupteur de polarité (29) qui est commandé par un décodeur de polarité (34) relié au signal de sortie amplifié de l'étage comparateur (24), à l'un des deux multivibrateurs monostables (30, 31) servant à l'attaque du servomoteur (10).

3. Appareil de mesure de l'état de remplissage selon la revendication 1 ou 2, caractérisé par un commutateur inverseur (28) pour la commutation alternée sur un circuit de commande du servomoteur (10) avec la fréquence du convertisseur tension-fréquence (27), dérivée à partir de l'écart de réglage, ou sur un circuit de commande pour l'attaque retardée du servomoteur (10) avec une fréquence réglable fournie par un oscillateur (36), ledit commutateur inverseur (28) étant commandé par un discriminateur à fenêtre (39) qui est relié, par l'intermédiaire d'un circuit affaiblisseur (38), au signal de sortie amplifié de l'étage comparateur (24).

4. Appareil de mesure de l'état de remplissage suivant la revendication 3, caractérisé par le fait que dans le conducteur de commande (33) pour le commutateur de polarité (29) est prévu un second commutateur inverseur (35) également commandé par le discriminateur à fenêtre (39) et qui, pour le décodage de la polarité de l'écart du réglage, est relié par l'intermédiaire d'un circuit à déclenchement de Schmitt (41) à la sortie du dispositif d'affaiblissement (38), dans la position de commutation pour l'attaque retardée du servomoteur (10).

5. Appareil de mesure de l'état de remplissage suivant l'une des revendications 1 à 4, caractérisé par le fait que dans le bâti tournant (11) se trouve disposé un potentiomètre (17) dont le bras glissant est relié à l'arbre d'entraînement (9) du servomoteur (10), par l'intermédiaire d'une transmission (14), et qui fournit un signal qui est proportionnel à la longueur de câble déroulé du tambour, lequel signal est appliqué à l'étage comparateur (24), en tant que grandeur de compensation.

6. Appareil de mesure de l'état de remplissage suivant la revendication 5, caractérisé par le fait que dans le bâti tournant (11) est disposé un générateur d'incréments (16) qui est relié à l'arbre d'entraînement (9) du servomoteur (10) et dont les signaux sont appliqués à des compteurs progressifs et dégressifs d'un affichage à distance, alors que pour l'introduction d'un préréglage, il est prévu un circuit de commande à l'aide duquel, et grâce à l'application d'une valeur de tension qui augmente la valeur de consigne de l'étage comparateur (24), la plaque de détection est déplacée avec une force prédéterminée vers le haut contre une butée supérieure (22), alors qu'après réglage de l'équilibre des couples, une impulsion de préréglage est fournie aux compteurs progressifs et dégressifs.

7. Appareil de mesure de l'état de remplissage selon l'une des revendications 1 à 6, caractérisé par le fait que pour dégager la plaque de détection (1) du liquide à mesure, on applique à un commutateur (45) commandée par un circuit logique de commande (43), et pour une durée d'environ 5 secondes, une tension de valeur élevée telle que la force d'adhérence exercée entre le liquide de mesure et la plaque de détection (1) est vaincue.

Fig.1

0 096 432

Fig. 2